# EUROPEAN PATENT APPLICATION

(11) **EP 2 143 768 A1**
(43) Date of publication of application: **13.01.2010**
(21) Application number: 08160170.0
(22) Date of filing: 11.07.2008
(51) Int. Cl.: C09D 11/00, C08G 61/12, H01L 51/00

(54) **Waterbased casting or printing composition**

(71) Applicant: Acreo AB, 164 40 Kista (SE)
(72) Inventor: Sandberg, Mats, 602 17, NORRKÖPING (SE)
(74) Representative: Haag, Malina Anna

(57) **Abstract**

The present invention relates to a method for providing a composition comprising water-soluble aggregates comprising an oxidized conductive polymer and a polymeric acid, comprising: providing a preparation comprising an oxidized or oxidizable conductive polymer and an organic solvent; adding an aqueous preparation comprising a polymeric acid; optionally oxidizing the oxidizable conductive polymer; and allowing the oxidized conductive polymer to interact with the polymeric acid to form an aqueous composition comprising water-soluble aggregates comprising an oxidized conductive polymer and a polymeric acid. The method can be used for providing waterbased casting or printing compositions.

## Description

### Field of the Invention

The present invention relates to a method for providing a composition comprising water-soluble aggregates prepared by oxidation of a conductive polymer in the presence of a polymeric acid.

### Background of the invention

Thin films of conductive and/or electrochromic organic polymers are very important for many electronic devices and are promising candidates for future electronics. Conductive organic polymers are very useful in a variety of electronic devices, such as electronic displays, indicators, memories, transistors etc. A large amount of organic conductive polymers have been shown to have interesting electrochromic properties, which means that the color is changed as the oxidation state of the polymer is changed. The electrochromic properties depend mainly on the possibility of the polymer to change oxidation state and on the electronic and the ionic conductivity of the polymer.

In many applications conductive organic polymers are used in thin films, such as continuous or discontinuous layers or patterns. In order to prepare thin films of conductive polymers, conventional casting techniques, for example spin-casting or other printing or casting techniques, such as inkjet printing, bar coating and flexographic printing, are used.

There is an ongoing search for finding optimal casting and printing compositions comprising an optimal choice of polymers for the manufacturing of electronic films with improved properties.

One concern is that electrochromic polymers must show both electronic conductivity and good ionic conductivity of the ions, as they are exchanged with an electrolyte as they switch electrochemically. For many electrochromic polymers, the ionic conductivity is intrinsically poor, so that sufficient ion transport is only achieved in electrolyte solvents that can swell the electrochromic material, for example acetonitrile. This type of solvent is suitable in laboratory experiments but not for printed devices in consumer products. In other electrochromic materials, the electron transport is limiting. Therefore, there is a need to blend materials that can impart sufficient ionic and electronics conductivity into many electrochromic materials.

Another important concern is that many electrochromic polymers are soluble in organic solvents, but generally show low solubility in water, which have resulted in that organic solvents, such as chloroform, are predominantly used in the preparation of casting or printing compositions for the manufacturing of polymeric electrochromic films. Hence, the possibility to provide aqueous compositions of conductive organic polymers is currently very limited. From environmental and health aspects, it is desirable to switch to aqueous compositions as it would result in an easier handling of the chemicals in the process and a reduced risk for exposure to hazardous chemicals. In industrial printing, it is hence desirable that the inks are free from organic volatile materials. Therefore, there is a need in the art for providing a method for providing aqueous casting or printing compositions for the manufacture of conductive films.

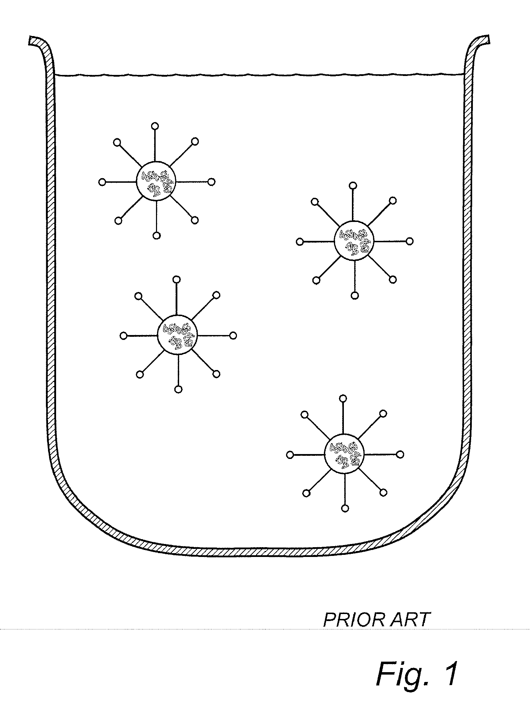

In Landfester et al, (Advanced Materials, vol. 14, 2002, p 652) a method to render polymers soluble in organic solvents water processable by using a miniemulsion technique is described. In this method, nanospheres of the polymer are formed by the action of ultrasonic emulsification and the action of a surfactant and exist as a stable dispersion in water of miniemulsion type. The obtained miniemulsion is illustrated in Fig. 1. However, according to the method, SDS or another surfactant must present in the water-based composition in order to achieve the aqueous dispersion of the polymer. Presence of low-molecular surfactants in printing inks is generally not desirable since they can cause foaming. Further, in the printing of electronic devices it might be necessary to remove low molecular surfactants after printing since the surfactants might migrate and cause degradation of the device properties. For example, the surfactants may migrate into an interface between two layers and cause delamination, loss of contact. The surfactant is freely present in the formed film and can hence migrate and cause reduced function of the electronic device. Furthermore, solid nanoparticles are not ideal for creating a conductive film in comparison to a dissolved polymer.

Kietzke et al (Nature Materials, vol. 2, June 2003, p 408-412) describes the possibility to use two neutral conductive polymers which are dissolved in an organic solvent, and then dispersed as solid nanoparticles in water by using SDS. In the method, an organic solution of two neutral polymers are mixed with water containing an appropriate amount of a low molecular surfactant, for example SDS. After stirring and sonication, the organic solvent is evaporated which results in an aqueous dispersion of neutral polymers in the form of solid nanoparticles stabilized by the surfactants. However, a polymer blend, which is blended on molecular level is not possible to achieve by using this method. A more homogenously blended polymer composition of electron conducting and ion conducting polymers is generally desirable in the manufacturing of electrochromic polymeric films. Moreover the method is limited to polymers which are soluble in organic solvents.

There is a need in the art for providing further methods for the preparation of casting or printing compositions. New preparation methods will facilitate the development and improvement of conductive and electrochromic properties of casting or printing compositions. It will also enable improvements of the general properties of the casting or printing compositions such as adhesion and homogeneity. Especially, it is desirable to find new methods which enable a reduced use of organic solvents or an exchange to water-based solvents, still allowing the same or improved conductive or electrochromic properties of polymeric films.

### Summary of the Invention

One object of the present invention is to overcome the above-mentioned problems of the prior art and to meet the needs in the art, and thus to provide a method for providing a composition comprising water-soluble aggregates for water based casting or printing compositions.

More specifically, it is an object to achieve blending at the molecular level between an oxidizable polymer and a polymeric acid that can impart ionic conductivity as well as impart water-based processability. For example, the present invention can be used for the preparation of a composition comprising a water-soluble polymer and an essentially non-watersoluble polymer, wherein the polymers are blended on a molecular level.

It is an object to provide the possibility to reduce the use of organic solvents and to switch to aqueous compositions due to health aspects and due to easier handling of chemicals during processing, such as during a printing process.

Another object is to provide the possibility to prepare a composition comprising water-soluble aggregates without being limited to the use of surfactants or to solid polymer nanoparticles.

A general object is to provide a method which allows for possibilities to compose new aqueous polymer compositions which can result in beneficial ionic and/or electronic conductivity or improved film properties. In addition, improved film adhesion can be obtained. New polymer compositions can result in improved rheology of casting and printing compositions. For example, the viscosity can be reduced by ultrasonic treatment, as the mean-size of the aggregates is reduced. In addition, improved film adhesion can be obtained.

These and other objects are achieved by methods and products according to the present invention.

In a first aspect, the present invention relates to a method for providing a composition comprising water-soluble aggregates comprising an oxidized conductive polymer and a polymeric acid, comprising: providing a preparation comprising an oxidized or oxidizable conductive polymer and an organic solvent; adding an aqueous preparation comprising a polymeric acid; optionally oxidizing said oxidizable conductive polymer; and allowing said oxidized conductive polymer to interact with said polymeric acid to form an aqueous composition comprising water-soluble aggregates comprising an oxidized conductive polymer and a polymeric acid. The aggregates are formed due to the electrostatic attraction between the positively charged oxidized polymer and the negative charges of the conjugate base to the polymeric acid.

By this method, new possibilities for obtaining polymer blends for casting and printing compositions are provided. The present invention can be used for the preparation of aqueous compositions, which in turn can be used for obtaining conductive films comprising a water-soluble polymer and an essentially non-watersoluble polymer, wherein the polymers are blended on a molecular level.

For example, the method allows for the use of new aqueous based casting or printing compositions comprising an oxidized polymer and a polymeric acid. Further, the method allows for polymer blends, which are blended at a molecular level, hence providing beneficial film properties. In addition, new polymer compositions can result in improved adhesion of an electrochromic polymer film, for example a polymer film that has poor adhesion to a hydrophilic substrate.

Preferably, allowing said oxidized conductive polymer to interact with said polymeric acid is performed by using ultrasonic treatment. By using ultrasonic treatment, an efficient interaction between the oxidized polymer and the polymeric acid is obtained. In addition, ultrasonic treatment may reduce the aggregate size and thereby provide beneficial film properties. When the aggregates has formed, the remaining organic solvent can be removed, and preferably be recycled. A suitable organic solvent is chloroform, since it provides solubility for non-polar polymers.

In a second aspect of the invention, the method provides a new alternative way of providing an aqueous composition comprising aggregates of long alkyl chain derivatives of polymers of dialkoxy derivatives of thiophene and pyrrole, and polymeric acid, such as PSS.

The oxidizable conductive polymer can either be oxidized spontaneously or oxidized by adding an oxidizing agent. For example, the oxidizable or oxidized conductive polymer includes polythiophenes, PEDOT polyaniline or derivatives thereof, since these polymers are relatively easy to oxidize. The polymeric acid includes for example a PSS, polyacid, or derivatives thereof, since a counter ionic polymer is desired. Preferably the polymeric acid provides improved conductivity to the formed polymer film. The method can also comprise adding a monomer enabling grafting of the polymer or the polymeric acid or both. By adding a monomer, grafting of the polymer blend can be achieved. This can be advantageous in certain applications where improved adhesion is desired. The method may further comprise the step of filtrating the aqueous composition. By filtration, large undesired aggregates can be removed from the printable composition. The preparation comprising an oxidized or oxidizable conductive polymer or said aqueous preparation comprising a polymeric acid may further comprise a surfactant. By using a surfactant, additional water solubility effects can be achieved. The method according to the invention can also comprise adding an additional electrochromic composition to the mixture before or after allowing said oxidized conductive polymer to interact with said polymeric acid to form an aqueous composition comprising water-soluble aggregates comprising an oxidized conductive polymer and a polymeric acid. The additionally added electrochromic composition can for example be PEDOT:PSS. By the addition of an additional electrochromic composition improved electrochromic properties can be obtained.

The method can also comprise casting or printing of a film by using a preparation obtained from a composition according to the invention.

In a third aspect, the invention relates to a composition obtainable by the method above. Compositions obtainable by the method according to the invention comprise a water-soluble polymer and an essentially non-watersoluble polymer, wherein the polymers are blended on a molecular level. Such compositions have beneficial ionic and/or electronic conductivity and/or improved film properties.

In a fourth aspect, the invention relates to a casting or printing composition comprising a composition obtainable by the method according to the invention. If needed, the casting or printing composition can comprise additional agents, such as rheology controlling agents and/or setting agents. The skilled man in the art knows how to provide a suitable casting or printing composition from the composition obtainable by the method according to the invention. The additional agents are chosen depending on which casting or printing method that is used.

### Brief Description of the Drawings

The invention will now be described in more detail with reference to the accompanying schematic drawings, which by way of example illustrate currently preferred embodiments of the invention.
Fig.1 schematically illustrates miniemulsion according to prior art wherein an eletrochromic polymer is dispersed as particles in an aqueous phase by using a low molecular surfactant.
Fig. 2a-c schematically illustrate an embodiment of the method according to the invention for providing a composition comprising water-soluble aggregates comprising an oxidized conductive polymer and a polymeric acid, wherein:

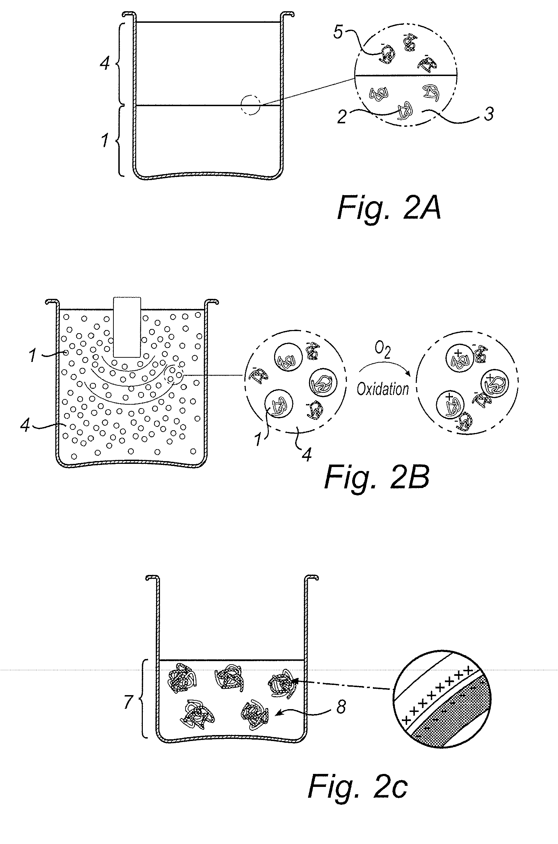

Fig. 2a shows a preparation comprising an oxidized or oxidizable conductive polymer in an organic solvent and an aqueous preparation comprising a polymeric acid. The organic and aqueous phase are phase separated;
Fig. 2b shows the optional oxidation of the oxidizable conductive polymer and allowing the oxidized conductive polymer to interact with the polymeric acid to form an aqueous composition comprising the water-soluble aggregates; and
Fig. 2c shows the obtained aqueous composition comprising the water-soluble aggregates wherein the organic solvent has been evaporated.

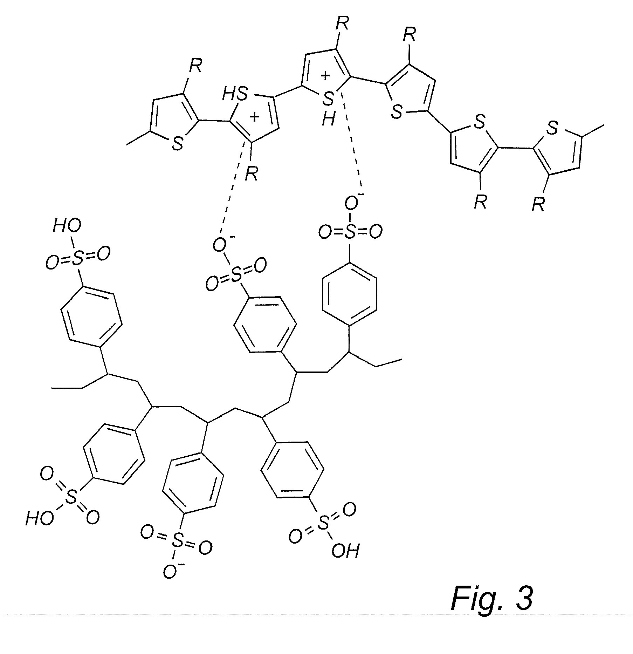

Fig. 3 illustrates an example of a molecule structure of a part of a water-soluble aggregate which can be obtained according to the invention, wherein the oxidized polymer is of polythiophene derivate and the polymeric acid is PSS. The aggregate is held together by electrostatic interactions.

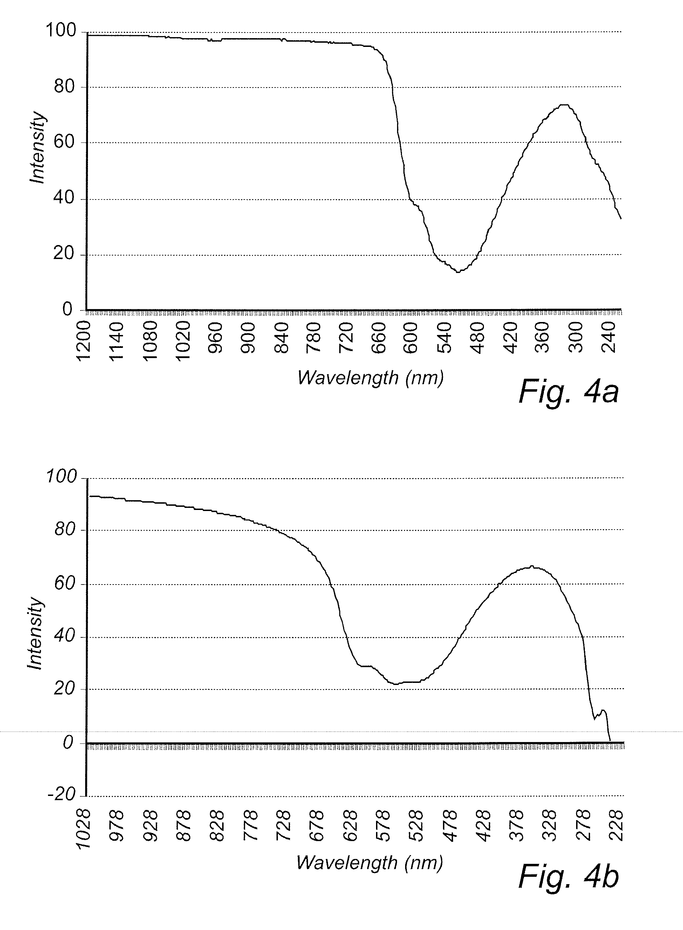

Fig. 4a shows an UV-VIS spectrum of the surface of a polymer film made of poly(3-octylthiophene) and SDS.
Fig. 4b shows an UV-VIS spectrum of the surface of a polymer film made of poly(3-octylthiophene) and PSS.

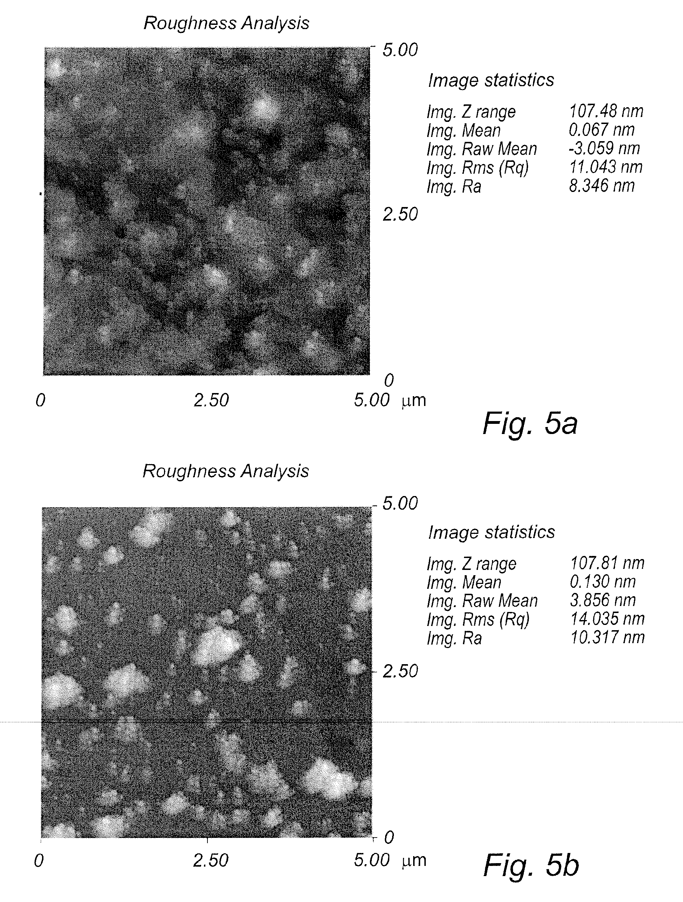

Fig. 5a shows an AFM image of the surface of a polymer film made of poly(3-octylthiophene) and PSS.
Fig. 5b shows an AFM image of the surface of a polymer film made of poly(3-octylthiophene) and SDS.

### Detailed Description of Preferred Embodiments

The invention relates to a method for providing a composition comprising water-soluble aggregates comprising an oxidized conductive polymer and a polymeric acid. An embodiment of the method according to the invention for preparing an aqueous composition comprising water-soluble aggregates is schematically illustrated in Fig. 2a-c. The present method comprises:
A preparation 1 comprising an oxidized or oxidizable conductive polymer and an organic solvent is obtained by dissolving a solid oxidized or oxidizable conductive polymer 2 or a salt thereof, into the organic solvent 3. The preparation can also be obtained by adding a liquid concentrate of an oxidized or oxidizable conductive polymer. The polymer which is added can be in oxidized form, or in unoxidized form and be oxidized later during the method. Advantageously, a solution of an entirely dissolved polymer is obtained. The preparation 1 can also be made by partly dispersing the oxidized or oxidizable conductive polymer 2 into the organic solvent 3. In order to dissolve or disperse the oxidized or oxidizable polymer into the organic solvent, agitation, ultrasonic treatment or gentle heating may be used.

The term "oxidized or oxidizable conductive polymer" 2 as it is used herein, refers to at least one polymer which exhibits electronic or ionic conductivity, or both, and which can be transformed into different oxidation states and which are generally considered as soluble in organic solvents. The oxidized or oxidizable conductive polymer is either provided directly in oxidized form or is oxidized when dispersed into the organic phase, when added to the aqueous phase, or is oxidized during ultrasonic treatment.

The oxidized or oxidizable conductive polymer can include any polymer comprising monomer units made up of five membered heterocyclic rings and solubilized by one or two alkyl or alkoxy groups in the 3- and 4-positions, such as a 3,4-alkylenedioxy substituted five membered heterocycles. This includes for example polythiophenes and polypyrrole and derivatives thereof, such as poly (3-alkylthiophenes) and poly (3,4-alkylenedioxy)-2,5-tiophenes comprising a side group, which increases the solubility. The polymer can be any conductive polymer which is soluble in organic solvent and which can be oxidized by air alone, by air in presence of an acid, or by an oxidizing agent. Polymers that are oxidizable by air in presence of a strong acid are preferred in this invention. It is for example known that poly(3-alkylthiophenes) in chloroform solution can be oxidized by air in the presence of methylsulfonic acid, but not in absence of acids or presence of weaker acids such as carboxylic acids. Other examples of polymers that are oxidized by air in presence of strong acids are the poly(3,4-ethylenedioxythiophenes). The polymer can also be any conductive polymer which is partly soluble in organic solvent and which can be oxidized.

The organic solvent 3 can be any organic solvent which is suitable for dissolving an oxidizable conductive polymer, for example chloroform. Chloroform is preferred since it is a good solvent, evaporates readily and is non-flammable. If desirable, mixtures of organic solvents can be used.

An aqueous preparation 4 comprising a polymeric acid 5 is added to the preparation comprising an oxidized or oxidizable conductive polymer. The aqueous preparation 4 comprising a polymeric acid 5 can be provided by dissolving a solid counter-ionic polymer composition, such as a salt of polymeric acid or using a liquid concentrate comprising polymeric acid. Preferably, the polymeric acid 5 is entirely dissolved in the water. The aqueous preparation 4 can also be made by dispersing a polymeric acid 5 in water 6. In order to dissolve or disperse the polymeric acid, agitation, ultrasonic treatment or gentle heating may be used.

The term "polymeric acid" 5 as is used herein, refers to any polymer which can be transformed into an ionic state, for example sulfonic acids, phosphonic or phosphoric acids or combinations thereof. Polymeric acids can for example include poly(styrene sulfonic acids), poly(acrylamidopropyl-sulfonic acids), poly(vinylphosphoric acids) or derivates thereof. Preferably, PAMPS (polyacrylamidopropylsulfonic) acids or a salt thereof is used. Other polymers which can form negative ionic charge and which provides water processability can also be used according to the invention. The ionization may occur spontaneously or by adding an ionization agent or by adjusting the pH of the solution. Preferably a strong acid is used, since it will increase the probability of air oxidation of the oxidizable polymer. The polymer may be provided as a solid composition or as a liquid concentrate.

The oxidized conductive polymer in the organic solvent is then allowed to interact with the polymeric acid in the aqueous phase. The interaction is facilitated by increasing the interfacial surface area between the organic and aqueous phase, preferably by homogenisation. In many cases the oxidation is obtained during this treatment, for example by using sonification. By the treatment, the oxidized conductive polymer molecules become associated with the polymeric acid molecules to form water-soluble aggregates 8. Subsequently, an aqueous composition 7 comprising water-soluble aggregates 8 comprising an oxidized conductive polymer and a polymeric acid is obtained. In embodiments of the invention the organic solvent 3 is then evaporated.

The term "aggregate" as it is used herein, refers to at least one oxidized conductive polymer chain and at least one molecular chain of a polymeric acid which are assembled by electrostatic interaction. More specifically, the homogenization serves to bring the polymeric acid into contact with the oxidized or oxidizable polymer. Preferably, the interaction of the oxidizable polymer and the polymeric acid takes preferably place under conditions that can oxidize the polymer. Oxidation results in positive charges in the oxidized polymer molecules so that electrostatic interactions between the oxidized polymer and the conjugate bases of the polymeric acid, can provide for blending at the molecular level and water solubilization of the aggregates. It should be noted that the blending and the water solubilization occurs in a way that not would be possible by using the above described prior art. The homogenisation is preferably done by using ultrasonic treatment, preferably at high energy, for example 20 kW/L. The homogenisation is preferably performed at room temperature or at slightly elevated temperatures.

The molecular weight of the oxidizable polymer and the polymeric acid may be as desired. For example, if it is desired to induce new functional groups to the polymers during sonification a higher molecular weight may be chosen, since sonification treatment may result in breakage of the polymer chains and hence result in the formation of functional groups. The introduction of functional group by cleaving of the polymer chain may be beneficial since it can improve the adhesion properties of the formed film.

In addition, the polymer concentrations of the preparation 1 and 4 can be any, as long as the requirements of the method are meet.

The solubility of the oxidized or oxidizable conductive polymer or the polymeric acid can be further improved by using additives such as surfactants or other solubilizing agents. In this case the preparation 1 or 4 will comprise an emulsion or suspension of the polymer. Alternatively, the preparation 1 comprising an oxidized or oxidizable conductive polymer is obtained by polymerization. In this case a monomer and a polymerisation initiator is added to the organic solvent.

The mixing ratio of the oxidized or oxidizable conductive polymer and the polymeric acid can be chosen as desired. In order to obtain good conductivity, it is advantageous to use amounts of polymers which allow for the formation of a film comprising one continuous conductive phase of any of the polymers. Preferably, the polymeric acid is present in excess over the oxidizable or oxidized polymer. This allows for oxidation and a good solubilization of the oxidized polymer.

Alternatively to ultrasonic treatment, the interaction can be obtained by using vigorous agitation. Other interaction methods can also be used as long as the sufficient interaction is obtained.

Additional cooling may be necessary due to the high effects that are preferably used during sonification. The needed treatment time varies depending on the treatment method and depending on if the aggregate size is to be reduced.

The organic solvent 3 is either spontaneously evaporated during ultrasonic treatment or can easily be separated by any suitable separation method, such as evaporation by adding an external heat source. The amount of organic solvent, which is used in casting or printing compositions, can hence be reduced or eliminated from the casting or printing process. Moreover, the method allows for the organic solvent to be recycled.

Fig. 3 shows a typical arrangement of a water-soluble aggregate according to the invention. The interaction between the oxidized conductive polymer and the polymeric acid is essentially an intermolecular electrostatic interaction by the positively charged oxidized conductive polymer and the negatively charged polymeric acid, and results in watersoluble aggregates. Fig. 3 shows the arrangement in a composition comprising watersoluble aggregates comprising a polythiophene derivate and PSS.

In another embodiment of the invention the method is combined with further treatment of the composition. Any further treatment can be used, which results in improved properties of the composition, such as purity, rheology, film properties, conductive properties and electrochromic properties. Sonification may be used to further solubilize the oxidizable polymer or to reduce the size of the aggregates. Further, filtration can be used in order to remove undesired side-products, such as large solid aggregates. Furthermore, curing can be used following the casting or printing process in order to dry, fixate or react the polymer film onto the substrate. The curing is preferably performed by heating, however it might be beneficial to add a monomer and an initiator or an epoxy compound in order to achieve sufficient fixation.

In still another embodiments of the invention, further additives are added to the preparation comprising an oxidized or oxidizable polymer and organic solvent, the aqueous preparation comprising the polymeric acid and/or the final composition comprising the water-soluble aggregates. For example, a monomer can be added in order to graft the oxidizable conductive polymer to the polymeric acid. By utilizing grafting the stability of the water-soluble aggregates can be increased if necessary. Grafting can be obtained by adding a polymerisable monomer such as acrylic acid or inducing radical formation by sonification. Further, a surfactant can be added in order to increase the stability of the oxidizable conductive polymer, the polymeric acid and/or the water-soluble aggregates. Further, any additive can be added which enables curing of a film obtained by the present composition comprising water-soluble aggregates. Furthermore, any additive which improves the rheological properties of the obtained composition comprising water-soluble aggregates can be added in order to provide a casting or printing composition with beneficial rheology. Furthermore, any additive which provides improved conductive or electrochromic properties can be added, for example carbon nanotubes. Furthermore, any additive which improves the film adhesion may be added. Other additives that may be added include stabilizing agents or a further solvent.

Although the present invention has been described in connection with particular embodiments thereof, it is to be understood that various modifications, alterations and adaptations may be made by those skilled in the art without departing from the claimed scope. For example, the method may be modified, for example the addition of the organic phase to the aqueous phase may be performed in several steps during sonification. In addition, the organic solvent can be redissolved in water and sonificated anew to improve the solubility and homogeneity. Further conductive polymers, such as PEDOT:PSS can be mixed with the aggregates in order to obtain improved conductivity of the formed layers.

The invention is further illustrated by the following examples, which are not to be construed as limiting, but merely as an illustration of some preferred features of the invention.

### Example 1 a

Preparation of an aqueous composition according to the present method.

A polythiophene derivate, poly(3-octylthiophen-2,5diyl), regioregular, was dissolved in chloroform in a concentration of 1 wt%. Poly(styrenesulfonic acid), PSSH, was dissolved in water in a concentration of 5 wt%.

The mixture was sonificated, at an effect of 10+50%, 10% duty cycle for 4*1 minutes, by using an ultrasonic horn of model Bandelin ultrasonic homogenizer HD2200.

During sonification a color change was observed. While the original polymer solution is orange-yellow and the PSSH is pale yellow, the color of the heavy phase changes to reddish-violet. This is caused by the oxidation of the polythiophene derivate molecules during sonification.

As the sonification proceeded with high effect per volume the chloroform evaporated. When all chloroform had evaporated a homogeneous aqueous composition with wine-red color was obtained.

### Example 1 b

Preparation of an aqueous composition according to the present method, with improved electronic conductivity.

A polythiophene derivate, poly(3-octylthiophen-2,5diyl), regioregular, was dissolved in chloroform in a concentration of 1 wt%. Poly(styrenesulfonic acid), PSSH, was dissolved in water in a concentration of 5 wt%. To this mixture was added an equal amount of a printable composition containing poly(3,4-ethylenedioxythiophene and polystyrenesulfonic acid, PEDOT:PSSH, ICP 1010 , supplied by AGFA. The mixture was sonificated, at an effect of 50%, 10% duty cycle for 4*1 minutes, by using an ultrasonic horn of model Bandelin ultrasonic homogenizer HD2200.

### Example 2

Use of the obtained composition in example 1 b for the manufacturing of a lateral pixel in an electrochromic stack. The lateral pixel comprises a lower layer of PEDOT/PSS which serves as an electrochromic layer that can provide blue color to the pixel, and as a supporting electrode for a top electrochromic layer, whose conductivity is so poor that it is difficult to operate a pixel of that polymer without a conducting substrate. The lateral pixel is masked by tape and the composition in example 1 a is cast in the opening. After drying the film, a printable electrolyte is deposited so that it covers both the area covered with the electrochromic polymer and areas not covered by it. The pixel can be switched by applying a potential between the two electrode areas. In its resting state, the pixel is red-violet. When a positive voltage is applied to the pixel area and a negative voltage is applied to the counterelectrode, the pixel gets a light green color. This represents oxidation of the electrochromic stack in the pixel area and a reduction in the counter electrode area.

When the polarisation is switched, the pixel area turns blue. The deep blue color of the reduced form of the bottom PEDOT layer dominates the color. After switching of the voltage, the pixel will reverse to its red color on standing. This return to the red state can be speeded by giving the pixel a short oxidation pulse or by shorting electrodes.

### Example 3

Comparison of the inventive method, described in example 1a, for manufacturing an electrochromic layer and using a low molecular surfactant instead of a polymeric acid.

A film of the material according to example 1 was prepared.

The film was compared to a film made by the same preparation parameters as in example 1 a, except that the amount of PSS was exchanged to equal amount of SDS in weight percent.

The films were then analysed by UV-VIS spectroscopy. As can be seen in Fig. 4a and 4b, the inventive layer provides significantly higher absorption in the region above 700 nm. This is attributed to doped states of polythiophenes. One can also see that the peaks attributable to p-stacking bands are different. This indicates that the polythiophene is present in oxidized form.

The films were also analysed by AFM. As can be seen in Fig. 5a and 5b showing typical surfaces of the two polymer films, the inventive layer is actually even smoother than the prior art layer. The smoothness of the inventive electrochromic film the size of the aggregates. Ultra-high smoothness is advantageously used in electronic devices comprising conductive or electrochromic films.

## Claims

1. A method for providing a composition comprising water-soluble aggregates comprising an oxidized conductive polymer and a polymeric acid, comprising:
• providing a preparation comprising an oxidized or oxidizable conductive polymer and an organic solvent;
• adding an aqueous preparation comprising a polymeric acid;
• optionally oxidizing said oxidizable conductive polymer; and
• allowing said oxidized conductive polymer to interact with said polymeric acid to form an aqueous composition comprising water-soluble aggregates comprising an oxidized conductive polymer and a polymeric acid.

2. The method according to Claim 1, wherein allowing said oxidized conductive polymer to interact with said polymeric acid comprises ultrasonic treatment.

3. The method according to Claim 1 or 2, wherein said oxidizable conductive polymer is oxidized spontaneously.

4. The method according to Claim 1 or 2, wherein said oxidizable conductive polymer is oxidized by adding an oxidizing agent.

5. The method according to any of the preceding claims further comprising the step of:
• removing said organic solvent.

6. The method according to any of the preceding claims further comprising:
• adding a monomer enabling grafting of the polymer or the polymeric acid or both.

7. The method according to any of the preceding claims further comprising the step of:
• filtrating said aqueous composition.

8. The method according to any of the preceding claims further comprising the step of:
• adding an additional electrochromic composition to the mixture before or after allowing said oxidized conductive polymer to interact with said polymeric acid to form an aqueous composition comprising water-soluble aggregates comprising an oxidized conductive polymer and a polymeric acid.

9. The method according to claim 8, wherein the electrochromic composition comprises PEDOT:PSS.

10. The method according to any of the preceding claims wherein said oxidizable or oxidized conductive polymer is polythiophenes, PEDOT, polypyrrole, polyaniline or derivatives thereof.

11. The method according to any of the preceding claims wherein said polymeric acid is a PSS, polyacid, or derivatives thereof.

12. The method according to any of the preceding claims, wherein said preparation comprising oxidized or oxidizable conductive polymer or said aqueous preparation comprising a polymeric acid further comprises a surfactant.

13. The method according to any of the preceding claims wherein said organic solvent is chloroform.

14. A method according to any of the preceding claims further comprising:
• casting or printing of a film by using a preparation obtained from a composition according to any of the preceding claims; and
• curing said film.

15. A composition obtainable by the method of any of the claims 1-14.

16. A casting or printing composition comprising a composition according to claim 15.
